# EUROPÄISCHE PATENTSCHRIFT

(11) **EP 2 440 505 B1**
(45) Veröffentlichungstag und Bekanntmachung des Hinweises auf die Patenterteilung: **08.05.2013**
(21) Anmeldenummer: 10720798.7
(22) Anmeldetag: 08.06.2010
(51) Int. Cl.: C04B 28/02, C04B 28/04, C04B 28/10, C04B 28/14, C04B 40/00

(54) **VERFAHREN ZUR HERSTELLUNG VON FASER-VERSTÄRKTEN BAUSTOFFBESCHICHTUNGEN**
METHOD FOR PRODUCING FIBER-REINFORCED BUILDING-MATERIAL COATINGS
PROCÉDÉ DE FABRICATION DE REVÊTEMENTS DE MATÉRIAUX DE CONSTRUCTION RENFORCÉS PAR DES FIBRES

(30) Priorität: 10.06.2009 DE 102009026892
(43) Veröffentlichungstag der Anmeldung: 18.04.2012
(73) Patentinhaber: Wacker Chemie AG, 81737 München (DE)
(72) Erfinder: BONIN, Klaus, 84489 Burghausen (DE); BEZLER, Jürgen, 84489 Burghausen (DE); REITMAJER, Kurt, 84375 Kirchdorf (DE)
(74) Vertreter: Ege, Markus
(86) Internationale Anmeldenummer: PCT/EP2010/057991
(87) Internationale Veröffentlichungsnummer: WO 2010/142669

(56) Entgegenhaltungen:
- EP-A1- 0 333 584
- DE-A1- 2 516 916
- DE-A1- 2 751 661
- DE-A1- 3 336 053
- GB-A- 2 145 353
- SKAZLIC M ET AL: "Tunnel repair using high-strength and high-performance sprayed concrete" CONCRETE ENGINEERING INTERNATIONAL, CONCRETE SOCIETY, CAMBERLEY, GB, Bd. 13, Nr. 1, 21. März 2009 (2009-03-21), Seiten 10-12, XP001520339 ISSN: 1742-352X
- ZHANG, G.: "Manufacture of polymer-enhanced glass fiber reinforced cement products" CHEMICAL ABSTRACTS, Bd. 113, Nr. 6, 6. August 1990 (1990-08-06), Seite 290, XP000182532 ISSN: 0009-2258

## Beschreibung

Die Erfindung betrifft Verfahren zur Herstellung von Faser-verstärkten Baustoffbeschichtungen sowie die damit erhältlichen Faser-verstärkten Baustoffbeschichtungen.

Zur Herstellung von Baustoffbeschichtungen werden häufig Baustoffbeschichtungsmittel eingesetzt, die mineralische Bindemittel, wie Zement oder Kalkhydrat, Füllstoffe, wie Sand oder Kies, und gegebenenfalls weitere Additive enthalten. Um die mechanischen Eigenschaften der Baustoffbeschichtungen zu verbessern, können Fasern eingebracht werden, beispielsweise in Form von Geweben. So wird in der DE-A 2516916 oder in der DE-A 4216204 die Herstellung von Baustoffbeschichtungen beschrieben, indem zuerst zementäre Mörtelmassen auf einen Untergrund aufgebracht und in einem separaten Schritt Fasergewebe bzw. Faservlies (woven oder nonwoven), wie beispielsweise Glasseidengewebe oder Glasfasergitter, in die Mörtelschicht eingebettet werden. Diese Vorgehensweise erfordert zum Anbringen der Mörtelschicht und der Fasern allerdings konzeptionell mehrere Arbeitsschritte und ist somit aufwändig.

Weniger aufwändig ist es dagegen, Fasern als Bestandteil der Baustoffbeschichtungsmittel zur Herstellung der Faser-verstärkten Baustoffbeschichtungen einzusetzen. Allerdings ist diese Vorgehensweise limitiert, da Baustoffbeschichtungsmittel mit höheren Gehalten an Fasern oder mit längeren Fasern, beispielsweise länger als 10 mm, nach den bisher bekannten Verfahren nicht verarbeitbar sind, d.h. nicht förderbar, beispielsweise nicht pumpbar sind, oder eine inhomogene Verteilung der Fasern in den Baustoffbeschichtungsmitteln aufweisen (sogenannte "Nesterbildung"), was sich nachteilig auf die Eigenschaften der Baustoffbeschichtungen auswirkt. Um Baustoffbeschichtungsmittel mit einem Gehalt an Fasern von über fünf Prozent verarbeiten zu können, ist nach Thomas Friedrich, BetonWerk International, Nr. 1, 2001, Seiten 126 bis 134 der Einsatz einer Spritztechnik erforderlich, bei der Baustoffbeschichtungsmittel und Fasern getrennt zu einem Spritzkopf geführt werden, um unter Druck innerhalb eines gemeinsamen Düsenstrahls in eine Schalung aufgetragen zu werden. Aber selbst bei Einsatz dieses Verfahrens ist die verarbeitbare Menge an Fasern in Beschichtungsmitteln noch limitiert. Auch bei diesem Verfahren tritt bei Applikation von Baustoffbeschichtungsmitteln mit höheren Fasergehalten Nesterbildung und damit verbunden eine Verschlechterung der mechanischen Eigenschaften entsprechend erhältlicher Baustoffbeschichtungen auf. Die vorgenannte Spritztechnik ist beispielsweise auch aus der DE-A 5190217 für die Applikation von Asphalt oder aus der GB 1493547 oder der GB 910674 für die Herstellung von Glasfasermatten für Kompositbauteile aus Kunststoffmaterial bekannt. Eine technische Ausführungsform der Spritztechnik und einer entsprechenden Spritzdüse ist in der DE-A 3336053 beschrieben.

Ein weiteres Problem bei der Durchführung von Spritzverfahren ist der dabei auftretende Rückprall. Als Rückprall wird die Menge an Baustoffbeschichtungsmittel bezeichnet, die beim Auftragen auf einen Untergrund nicht auf dem Untergrund haften bleibt, sondern abfällt und somit als Abfall entsorgt werden muss. Der Rückprall beträgt bei herkömmlichen Verfahren meist mehr als 30 Prozent des Auftrags. Dies ist insbesondere deswegen ein erheblicher ökonomischer Nachteil für den Einsatz von faser-modifizierten Baustoffbeschichtungsmitteln, da Fasern, wie beispielsweise Glasfasern, im Vergleich zu den sonstigen Komponenten der Beschichtungsmittel verhältnismäßig teuer sind. In der DE-A 2751661 ist ein maschinelles Spritztechnik-Verfahren beschreiben, in dem zerhackte Glasseide in einen Baustoffbeschichtungsmittelstrom eingesprüht wird und anschließend auf einen Untergrund aufgetragen werden. Auch die DE-A 2751661 enthält keine Angaben, wie der Rückprall verringert werden könnte oder wie Faser-verstärkte Baustoffbeschichtungen mit höheren Fasergehalten verarbeitet werden könnten. Ein weiteres Problem besteht darin, dass auf diese Weise meist viele Fasern aus der Oberfläche der Baustoffbeschichtungen herausragen. Die Baustoffbeschichtungen haben also keine einheitliche Oberfläche.

Die EP 0 333 584 offenbart die gemeinsame Versprühung von bis zu 15 % Glasfasern mit einer zementären Zusammensetzung umfassend ethylenisch ungesättigte Polymerisate wie beispielsweise basierend auf Polyvinylacetat. Bezogen auf die Trockenmenge kann der Gehalt an Polymerisat maximal 6.7 Gew.-% betragen.

Vor diesem Hintergrund bestand die Aufgabe, Verfahren zur Applikation von Baustoffbeschichtungsmitteln bereitzustellen, bei deren Anwendung ein geringerer Rückprall auftritt, und die Faser-verstärkte Baustoffbeschichtungen mit größeren Gehalten an Fasern, mit einheitlicheren Oberflächen sowie verbesserten mechanischen Eigenschaften zugänglich machen.

Die Aufgabe wurde überraschenderweise mit Verfahren gelöst, in denen zunächst Baustoffbeschichtungsmittel und Fasern mittels einer Spritzdüse zu je einem Strahl versprüht wurden und nach Vereinigung der so erzeugten Strahle auf einen Untergrund aufgetragen wurden, wobei entscheidend war, dass die Faser-modifizierten Baustoffbeschichtungsmittel Polymerisate auf Basis ethylenisch ungesättigter Monomere als Bestandteil enthielten.

Gegenstand der Erfindung sind Verfahren zur Herstellung von Faser-verstärkten Baustoffbeschichtungen,
indem Baustoffbeschichtungsmittel enthaltend 0,1 bis 70 Gew.-% mineralische Bindemittel, 1 bis 75 Gew.-% Füllstoffe und 0 bis 20 Gew.-% Zusatzstoffe,
mittels einer Spritzdüse zu einem Baustoffbeschichtungsmittelstrom versprüht werden und
ein oder mehrere Fasern in den Baustoffbeschichtungsmittelstrom eingebracht werden,
und der so erhaltene Faser-modifizierte Baustoffbeschichtungsmittelstrom anschließend auf einen Untergrund auftrifft,
dadurch gekennzeichnet, dass die Fasern in einer Menge von 15 bis 75 Gew.-% eingesetzt werden und
die Baustoffbeschichtungsmittel 7 bis 90 Gew.-% an einem oder mehreren Polymerisaten auf Basis ethylenisch ungesättigter Monomere enthalten,
wobei sich die Angaben in Gew.-% jeweils auf das Trockengewicht der Baustoffbeschichtungsmittel beziehen.

Als Fasern eignen sich natürliche oder synthetische Fasermaterialien, sowohl auf Basis von organischen als auch anorganischen Materialien, sowie Gemische daraus. Beispiele für natürliche, organische Fasern sind Baumwolle, Hanf, Jute, Flachs, Holzfasern, Cellulose, Viskose, Lederfasern, Sisal, Stroh, Schilf oder andere Gräser. Beispiele für synthetische, organische Fasern sind Keflar, Viskosefasern, Polyamidfasern, Polyesterfasern, Polyacrylnitrilfasern, Dralonfasern, Polyethylenfasern, Polypropylenfasern, Polyvinylalkoholfasern, Aramidfasern oder Kohlenstofffasern. Anorganische Fasern sind beispielsweise Glasfasern, Mineralwollfasern, wie Aluminiumoxidfasern, oder Metallfasern. Bevorzugt werden Glasfasern, Baumwollfasern, Polyacrylnitrilfasern und Cellulosefasern. Besonders bevorzugt werden Polypropylenfasern und Glasfasern, insbesondere alkalibeständige Glasfasern (auch bekannt unter der Bezeichnung AR-Glasfasern). Die Fasern können in Form von losen Fasern, bündelweise verklebten Fasern, fibrillierten Fasern, multifilamenten Fasern oder Fasern in Dosierverpackung eingesetzt werden. Es können auch beschlichtete Fasern Anwendung finden, beispielsweise mit Vernetzer oder Beschleuniger beschlichtete Fasern.

Die Fasern können beliebige Längen aufweisen, wie beispielsweise Längen von 0,1 µm bis unendlicher Länge, vorzugsweise 0,1 µm bis 200 mm, besonders bevorzugt 10 bis 200 mm und am meisten bevorzugt 15 bis 150 mm. Unendliche Länge bedeutet eine beliebige Länge, die größer als 0,1 µm ist. Die Fasern haben vorzugsweise Durchmesser von 5 bis 30 um. Es können auch Kombinationen von Fasern unterschiedlicher Länge eingesetzt werden, wobei die Längen der Fasern mit unterschiedlicher Länge zueinander im Verhältnis stehen von vorzugsweise 1 zu 100 bis 1 zu 1,1, besonders bevorzugt 1 zu 10 bis 1 zu 1,5 und am meisten bevorzugt 1 zu 5 bis 1 zu 1,5. Durch den Einsatz von Fasern unterschiedlicher Länge können Faser-verstärkte Baustoffbeschichtungen mit einheitlicherer Oberfläche erhalten werden; in derartigen Beschichtungen ragen weniger Fasern aus der Oberfläche der Faser-verstärkten Baustoffbeschichtungen heraus, bzw. die Fasern, die aus der Oberfläche der Faser-verstärkten Baustoffbeschichtungen herausragen, ragen weniger weit heraus - jeweils im Vergleich zu Faser-verstärkten Baustoffbeschichtungen, die mit einer entsprechenden Masse an Fasern mit einheitlicher Länge hergestellten wurden.

Es werden 15 bis 75 Gew.-% Fasern eingesetzt, jeweils bezogen auf das Trockengewicht der Baustoffbeschichtungsmittel. Diese Angaben bezüglich der Menge an Fasern verstehen sich zusätzlich zu den Mengeangaben betreffend Komponenten der Baustoffbeschichtungsmittel und nicht als Mengenanteil der Baustoffbeschichtungsmittel.

Geeignete mineralische Bindemittel sind beispielsweise Zement, insbesondere Portlandzement, Aluminatzement, insbesondere Calcium-Sulfo-Aluminatzement, Trasszement, Hüttenzement, Magnesiazement, Phosphatzement, oder Hochofenzement, sowie Mischzemente, Füllzemente, Flugasche, Microsilica, Kalkhydrat, Weißkalkhydrat, Calciumoxid (ungelöschter Kalk) und Gips. Bevorzugt werden Portlandzement, Aluminatzement und Hüttenzement, sowie Mischzemente, Füllzemente, Kalkhydrat, Weißkalkhydrat und Gips.

Im Allgemeinen enthalten die Baustoffbeschichtungsmittel 0,1 bis 70 Gew.-% mineralische Bindemittel, jeweils bezogen auf das Trockengewicht der Baustoffbeschichtungsmittel.

Beispiele für geeignete Füllstoffe sind Quarzsand, Quarzmehl, Calciumcarbonat, Dolomit, Aluminiumsilicate, Ton, Kreide, Weißkalkhydrat, Talkum oder Glimmer, oder auch Leichtfüllstoffe wie Bims, Schaumglas, Gasbeton, Perlite, Vermiculite, Carbo-Nano-Tubes (CNT). Es können auch beliebige Gemische der genannten Füllstoffe eingesetzt werden. Bevorzugt werden Quarzsand, Quarzmehl, Calciumcarbonat, Calciummagnesiumcarbonat (Dolomit), Kreide oder Weißkalkhydrat. Die Füllstoffe sind vorzugsweise feinteilig und haben beispielsweise Teilchendurchmesser von 0,1 bis 4.000 µm, besonders bevorzugt von 1 bis 1.000 µm, ganz besonders bevorzugt 1 bis 500 µm und am meisten bevorzugt von 1 bis 100 µm.

Im Allgemeinen enthalten die Baustoffbeschichtungsmittel 1 bis 75 Gew.-% und bevorzugt 5 bis 70 Gew.-% Füllstoffe, jeweils bezogen auf das Trockengewicht der Baustoffbeschichtungsmittel.

Weitere übliche Zusatzstoffe für Baustoffbeschichtungsmittel sind Verdickungsmittel, beispielsweise Polysaccharide wie Celluloseether und modifizierte Celluloseether, Stärkeether, Guar Gum, Xanthan Gum, Schichtsilikate, Polycarbonsäuren wie Polyacrylsäure und deren Teilester, sowie Polyvinylalkohole welche gegebenenfalls acetalisiert oder hydrophob modifiziert sein können, Casein und assoziativ wirkende Verdicker. Übliche Zusatzstoffe sind auch Verzögerer, wie Hydroxycarbonsäuren, oder Dicarbonsäuren oder deren Salze, Saccharide, Oxalsäure, Bernsteinsäure, Weinsäure, Gluconsäure, Zitronensäure, Sucrose, Glucose, Fructose, Sorbit, Pentaerythrit. Gängige Zusatzstoffe sind auch Vernetzer wie Metall- oder Halbmetalloxide, insbesondere Borsäure oder Polyborate, oder Dialdehyde, wie Glutardialdehyd; übliche Additive sind Abbindebeschleuniger, beispielsweise Alkali- oder Erdalkalisalze von anorganischen oder organischen Säuren. Darüberhinaus sind noch zu nennen: Hydrophobierungsmittel (z.B. Fettsäuren oder deren Derivate, Wachse, Silane oder Siloxane), Konservierungsmittel, Filmbildehilfsmittel, Dispergiermittel, Schaumstabilisatoren, Entschäumer, Verflüssiger und Flammschutzmittel (z.B. Aluminiumhydroxid).

Die Zusatzstoffe werden in den dafür üblichen, von der Art des Zusatzstoffes abhängigen, Mengen eingesetzt. Im Allgemeinen liegen die Mengen bei 0 bis 20 Gew.-%, vorzugsweise 0,1 bis 15 Gew.-% und besonders bevorzugt 1 bis 10 Gew.-%, jeweils bezogen auf das Trockengewicht der Baustoffbeschichtungsmittel.

Geeignete Polymerisate von ethylenisch ungesättigten Monomeren sind beispielsweise solche auf Basis von einem oder mehreren Monomeren ausgewählt aus der Gruppe umfassend Vinylester, (Meth)-acrylsäureester, Vinylaromaten, Olefine, 1,3-Diene und Vinylhalogenide und gegebenenfalls weiteren damit copolymerisierbaren Monomeren. Die Polymerisate sind vorzugsweise nicht vernetzt.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0,1 bis 5 Gew.-%, bezogen auf das Gesamtgewicht des Monomergemisches, Hilfsmonomere copolymerisiert werden. Bevorzugt werden 0,5 bis 2,5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden Mischpolymerisate von Vinylacetat mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von Vinylacetat, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit Vinylacetat, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Die Monomerauswahl bzw. die Auswahl der Gewichtsanteile der Comonomere erfolgt dabei so, das eine Glasübergangstemperatur Tg von -25°C bis +25°C, vorzugsweise -10°C bis +10°C, besonders bevorzugt -10°C bis 0°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate erfolgt in wässrigem Medium und bevorzugt nach dem Emulsions- oder Suspensionspolymerisationsverfahren - wie beispielsweise in DE-A 102008043988 beschrieben. Die Polymerisate fallen dabei in Form von wässrigen Dispersionen an. Bei der Polymerisation können die gängigen Schutzkolloide und/oder Emulgatoren eingesetzt werden, wie in der DE-A 102008043988 beschrieben. Bei Einsatz von Emulgatoren werden vorzugsweise keine anionischen Emulgatoren eingesetzt, da diese im Einzelfall zur Koagulation führen können. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Die Polymerisate in Form von wässrigen Dispersionen können wie in der DE-A 102008043988 beschrieben in entsprechende in Wasser redispergierbare Pulver überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt.

Die Baustoffbeschichtungsmittel enthalten 7 bis 90 Gew.-% Polymerisate, jeweils bezogen auf das Trockengewicht der Baustoffbeschichtungsmittel.

Die Baustoffbeschichtungsmittel enthalten vorzugsweise 4 bis 80 Gew.-%, besonders bevorzugt 7 bis 70 Gew.-% und am meisten bevorzugt 15 bis 55 Gew.-% Wasser, jeweils bezogen auf das Trockengewicht der Baustoffbeschichtungsmittel. Organische Lösungsmittel sind vorzugsweise nicht zugegen, d.h. vorzugsweise zu weniger als 0,1 Gew.-% enthalten, bezogen auf das Trockengewicht der Baustoffbeschichtungsmittel.

In einer alternativen Ausführungsform des erfindungsgemäßen Verfahrens werden hochpolymerhaltige Baustoffbeschichtungsmittel eingesetzt, die zu hochpolymerhaltigen, Faser-verstärkten Baustoffbeschichtungen führen. Hochpolymerhaltige Baustoffbeschichtungsmittel enthalten vorzugsweise 20 bis 90 Gew.-% und am meisten bevorzugt 30 bis 90 Gew.-% Polymerisate, bezogen auf das Trockengewicht der hochpolymerhaltigen Baustoffbeschichtungsmittel. Hochpolymerhaltige Baustoffbeschichtungsmittel enthalten vorzugsweise 0,1 bis 20 Gew.-%, besonders bevorzugt 0,1 bis 15 Gew.-% und am meisten bevorzugt 0,1 bis 10 Gew.-% mineralische Bindemittel, jeweils bezogen auf das Trockengewicht der hochpolymerhaltigen Baustoffbeschichtungsmittel. In den Verfahren zur Herstellung der hochpolymerhaltigen, Faser-verstärkten Baustoffbeschichtungen werden vorzugsweise Fasern mit Längen von 1 mm bis unendlicher Länge, besonders bevorzugt von 1 bis 200 mm und am meisten bevorzugt von 10 bis 100 mm eingesetzt. Die weiteren Bestandteile der hochpolymerhaltigen Baustoffbeschichtungsmittel entsprechen denen der Baustoffbeschichtungsmittel und können in den oben genannten Mengen enthalten sein. Hochpolymerhaltige Baustoffbeschichtungsmittel bzw. hochpolymerhaltige, Faser-verstärkte Baustoffbeschichtungen werden unter dem Begriff Baustoffbeschichtungsmittel bzw. Faser-verstärkte Baustoffbeschichtungen subsumiert, soweit dies zu keinem Widerspruch führt.

In einer weiteren alternativen Ausführungsform des erfindungsgemäßen Verfahrens werden Mörtelbeschichtungsmittel eingesetzt, die zu Faser-verstärkten Mörtelbeschichtungen führen. Mörtelbeschichtungsmittel enthalten 7 bis 20 Gew.-% Polymerisate, bezogen auf das Trockengewicht des Mörtelbeschichtungsmittels. Mörtelbeschichtungsmittel enthalten vorzugsweise 5 bis 40 Gew.-%, besonders bevorzugt 10 bis 35 Gew.-% und am meisten bevorzugt 15 bis 35 Gew.-% mineralische Bindemittel, jeweils bezogen auf das Trockengewicht der Mörtelbeschichtungsmittel. In den Verfahren zur Herstellung von Faser-verstärkten Mörtelbeschichtungen werden vorzugsweise Fasern mit Längen von 0,1 bis 200 mm, besonders bevorzugt von 1 bis 100 mm und am meisten bevorzugt von 10 bis 75 mm eingesetzt. Die weiteren Bestandteile der Mörtelbeschichtungsmittel entsprechen denen der Baustoffbeschichtungsmittel und können in den oben genannten Mengen enthalten sein. Mörtelbeschichtungsmittel bzw. Faser-verstärkte Mörtelbeschichtungen werden unter dem Begriff Baustoffbeschichtungsmittel bzw. Faser-verstärkte Baustoffbeschichtungen subsumiert, soweit dies zu keinem Widerspruch führt.

Die Baustoffbeschichtungsmittel können nach gängigen Verfahren, wie dem Trockenspritzverfahren oder dem Nassspritzverfahren, appliziert werden. Es können mehrere Schichten übereinander aufgetragen werden, wodurch Faser-verstärkte Baustoffbeschichtungen mit besonders geringem Luftgehalt erhalten werden.

Beim Nassspritzverfahren werden die Baustoffbeschichtungsmittel vorzugsweise zunächst in Form von Trockenmischungen eingesetzt. Trockenmischungen sind erhältlich, indem die einzelnen Komponenten der Baustoffbeschichtungsmittel im Wesentlichen ohne Wasseranteil in herkömmlichen Pulvermischvorrichtungen zu Trockenmischungen vermischt und homogenisiert werden. Trockenmischungen enthalten im Wesentlichen kein Wasser. Der Wasseranteil wird unmittelbar vor Einsatz der Trockenmischungen im erfindungsgemäßen Verfahren hinzugefügt, d.h. bevor die Baustoffbeschichtungsmittel der Spritzdüse zugeführt werden. Alternativ können aber auch einzelne oder alle Komponenten der Baustoffbeschichtungsmittel in wässriger Form eingesetzt werden, insbesondere können die Polymerisate in Form von wässrigen Dispersionen oder wässrigen Redispersionen von in Wasser redispergierbaren Pulvern eingesetzt werden.

Beim Trockenspritzverfahren werden die Baustoffbeschichtungsmittel in Form von Trockenmischungen der Spritzdüse zugeführt und die Zugabe von Wasser erfolgt in der Spritzdüse.

Die Baustoffbeschichtungsmittel werden mit gängigen Spritzdüsen, wie beispielsweise Schlitz- oder Runddüsen, zu einem Baustoffbeschichtungsmittelstrom versprüht. Dabei wird gegebenenfalls Druckluft eingesetzt, beispielsweise Druckluft mit bis zu 10 bar, vorzugsweise 1 bis 5 bar. Der Druck, mit dem die Baustoffbeschichtungsmittel durch die Düse gepumpt werden, beträgt üblicherweise 1 bis 70 bar, vorzugsweise 5 bis 30 bar und besonders bevorzugt 10 bis 25 bar.

Die Fasern können als Kurzschnitt oder in Form von endlos Fasern eingesetzt werden. Bei Kurzschnitt handelt es sich um Fasern, die vor Durchführung des erfindungsgemäßen Verfahrens auf die gewünschte Länge zurechtgeschnitten werden. Im Falle des Einsatzes von endlos Fasern, d.h. von Fasern mit beliebiger Länge, können die Fasern gegebenenfalls während der Durchführung des Verfahrens zurechtgeschnitten werden, vorzugsweise mittels eines Schneidwerks, das in die Spritzdüse integriert ist.

Die Fasern werden in den Baustoffbeschichtungsmittelstrom eingebracht; im Allgemeinen werden mit der Spritzdüse insgesamt mindestens zwei Ströme erzeugt; mindestens ein Strom mit Fasern und mindestens ein Strom mit den Baustoffbeschichtungsmitteln, die aufeinandertreffen und sich vereinigen, bevor einer der Ströme auf den Untergrund auftrifft. Dabei wird eine gleichmäßige Durchmischung der Fasern mit den Baustoffbeschichtungsmitteln erreicht. Die Fasern werden also erst nach Erzeugen des Baustoffbeschischtungsmittelstroms in die Baustoffbeschichtungsmittel eingebracht.

Alternativ kann die Spritzdüse auch so ausgestaltet sein, dass drei oder mehr Ströme generiert werden, die sich vereinen, bevor einer der Ströme auf den Untergrund auftrifft. Auf diese Weise können Komponenten über die Spritzdüse separat zudosiert werden, beispielsweise Zusatzstoffe, wie Beschleuniger oder Vernetzer. Auch die Polymerisate können in Form von wässrigen Dispersionen vollständig oder teilweise über die Spritzdüse separat zugegeben werden.

Der Abstand der Spritzdüse vom Untergrund beträgt beim erfindungsgemäßen Verfahren üblicherweise 10 bis 500 cm, vorzugsweise 20 bis 100 cm.

Die Schichtdicke der Faser-verstärkten Baustoffbeschichtungen beträgt üblicherweise 1 bis 100 mm, vorzugsweise 1 bis 50 mm, besonders bevorzugt 2 bis 20 mm und am meisten bevorzugt 3 bis 7 mm. Das Verfahren wird vorzugsweise bei Temperaturen von 0 bis 100°C, besonders bevorzugt von 5 bis 50°C und am meisten bevorzugt von 5 bis 30°C ausgeführt. Den Baustoffbeschichtungsmitteln kann während der Durchführung des Verfahrens Wärme zugeführt werden, beispielsweise durch Beheizen der Fördersysteme, wie Schläuche, oder der Vorratsbehälter, die Baustoffbeschichtungsmittel enthalten, beispielsweise mittels elektrischem Heizen oder auch Dampfbeheizung. Durch die Wärmezufuhr kann die Verarbeitbarkeit der Baustoffbeschichtungsmittel, insbesondere bei kalten Umgebungstemperaturen, verbessert werden.

Beim Untergrund kann es sich um Wände, Böden, Decken oder sonstige Flächen oder Schalungen handeln. Beispiele für Untergründe sind natürliche Untergründe, wie Fels, Gestein oder Böschungen, metallische Materialien, wie Stahl oder Aluminium, organische Materialien, wie Holz, Fasermatten tierischen, pflanzlichen oder synthetischen Ursprungs, expandierte oder extrudierte Kunststoffe, insbesondere von Polystyrol, oder Schäume von organischen Polymeren, oder anorganische Materialien, wie Beton, Ziegel, Metallträger, Mauerwerk, Dächer, Böden, wie Estriche oder Betonböden, Mineralschaumplatten, Gipsplatten oder Baustoffe enthaltend Leichtfüllstoffe, wie expandierte Perlite, Blähglas oder Blähton.

Nach erfindungsgemäßem Auftragen der Baustoffbeschichtungsmittel auf den Untergrund kann die so erhaltene Faser-verstärkte Baustoffbeschichtung beispielsweise mit einer Walze geglättet werden. Dadurch können gegebenenfalls vorhandene Unebenheiten beseitigt oder abstehende Fasern in die Beschichtung gedrückt werden. Dieser Schritt wird insbesondere bei Durchführung des Verfahrens zur Herstellung der hochpolymerhaltigen, Faser-verstärkten Beschichtungen durchgeführt.

Das erfindungsgemäße Verfahren ist mit einer Reihe von Vorteilen verbunden. So tritt bei Durchführung des erfindungsgemäßen Verfahrens im Vergleich zu herkömmlichen Verfahren ein geringerer Rückprall auf. Dieser vorteilhafte Effekt wird durch den Polymeranteil der Faser-modifizierten Baustoffbeschichtungsmittel bewirkt und wirkt sich Ressourcen schonend aus. Zudem sind die Baustoffbeschichtungsmittel gut verarbeitbar und in trockenem wie wässrigen Zustand gut förderbar bzw. pumpbar, ohne dass nach Zusatz selbst großer Mengen an Fasern eine Igelbildung oder Nesterbildung der Fasern auftritt. Vielmehr sind die Fasern in den Faser-verstärkten Baustoffbeschichtungen gleichmäßig verteilt. Dies wirkt sich in Kombination mit dem Polymeranteil und dem möglichen höheren Faseranteil vorteilhaft auf die mechanischen Eigenschaften aus, wie beispielsweise auf den Einbeulwert, die Zugfestigkeit, Haftzugfestigkeit, im Vergleich zu entsprechenden herkömmlichen Baustoffbeschichtungen. Die erfindungsgemäßen Faser-verstärkten Baustoffbeschichtungen zeichnen sich auch durch eine hohe Duktilität aus, d.h. sie sind biegbar, ohne dass die Faser-verstärkten Baustoffbeschichtungen Risse bilden oder gar brechen.

Das erfindungsgemäße Verfahren kann zur Herstellung der gängigen Baustoffbeschichtungen angewendet werden, insbesondere für den Bau, die Auskleidung oder Herstellung von Böschungen, Tunnel, Minen, Kanälen oder der Beschichtung von Böden, Wänden, Dächern, Metallträgern, Rohren wie auch zur Betonsanierung oder der Bauwerksverstärkung.

Insbesondere ist das Verfahren auch zur Herstellung von Kompositsystemen, wie Wärmedämmverbundsystemen (WDVS), geeignet. Hierzu können Dämmplatten, wie Hartschaumplatten oder Steinwollplatten, mit einem Klebemörtel an einem Mauerwerk befestigt werden und anschließend nach dem erfindungsgemäßen Verfahren eine Faser-verstärkte Baustoffbeschichtung aufgetragen werden. Alternativ können vorgefertigte Platten oder Bauelemente mit Baustoffbeschichtungsmitteln beschichtet werden und am Bestimmungsort verbaut werden.

Die Verfahren zur Herstellung von hochpolymerhaltigen, Faser-verstärkten Baustoffbeschichtungen eignen sich insbesondere zur Herstellung von Dach- oder Wandbeschichtungen, bei denen eine hohe Fexibilität bei gleichzeitg hoher Belastbarkeit hinsichtlich Schlagfestigkeit, Reißdehnung und Reisfestigkeit erforderlich ist. Die Verfahren zur Herstellung von Faser-verstärkten Mörtelbeschichtungen eignen sich insbesondere zur Herstellung von Putzen, Spritzbeton, Selbstverlaufsmassen oder Feuerschutzmörteln.

Die folgenden Beispiele dienen der detaillierten Erläuterung der Erfindung und sind in keiner Weise als Einschränkung zu verstehen.

### Baustoffbeschichtungsmittel:

Beschichtungsmittel A (mit polymerem Bindemittel):

| | |
|---|---|
| 60,00 Gew.-% | Quarzsand BCS 413 |
| 29,70 Gew.-% | Zement Milke Cem I 42,5 |
| 10,00 Gew.-% | VINNAPAS 5044 N (Polyvinylalkohol stabilisiertes Vinylacetat-Ethylen-Copolymer in Form eines in Wasser redispergierbaren Pulvers; Handelsname der Firma Wacker Chemie) |
| 0,15 Gew.-% | Tylose H 300 P2 |
| 0,15 Gew.-% | Melflux 2651 F |

Die vorgenannten Komponenten wurden mit 28,0 Gew.-% Wasser, bezogen das Trockengewicht des Baustoffbeschichtungsmittels, angerührt.

Beschichtungsmittel B (ohne polymeres Bindemittel):

| | |
|---|---|
| 64,00 Gew.-% | Quarzsand BCS 413 |
| 35,70 Gew.-% | Zement Milke Cem I 42,5 |
| 0,15 Gew.-% | Tylose H 300 P2 |
| 0,15 Gew.-% | Melflux 2651 F |

Die vorgenannten Komponenten wurden mit 29,0 Gew.-% Wasser, bezogen das Trockengewicht des Baustoffbeschichtungsmittels, angerührt.

Beschichtungsmittel C: hochpolymerhaltiges Beschichtungsmittel:

| | |
|---|---|
| 93,0 Gew.-% | VINNAPAS LL 6333 (Polyvinylalkohol stabilisiertes Vinylacetat-Ethylen-Copolymer in Form einer wässrigen Dispersion mit einem Feststoffgehalt von 60%; Handelsname der Firma Wacker Chemie) |
| 2,0 Gew.-% | Kalkhydrat (mineralisches Bindemittel) |
| 5,0 Gew.-% | Omyacarb 20BG (carbonatischer Füllstoff) |

Beschichtungsmittelkomponente D:

| | |
|---|---|
| 24,5 Gew.-% | Al₂(SO₄)₃ (Zementbeschleuniger) |
| 2,5 Gew.-% | Borsäure (Vernetzer) |
| 73,0 Gew.-% | Wasser |

### Applikation der Baustoffbeschichtungsmittel:

Die Applikation der Baustoffbeschichtungsmittel erfolgte mittels einer Dreistoffdüse (Faserspritzpistole der Firma Wolfangel) als Spritzdüse, die zusätzlich ein Schneidwerk für Fasern enthielt.

Durch je eine Düse der Dreistoffdüse wurden gleichzeitig das jeweilige Beschichtungsmittel A, B bzw. C, Druckluft mit einem Druck von 2-3 bar und gegebenenfalls Beschichtungsmittelkomponente D geführt und zu einem Baustoffbeschichtungsmittelstrom vereinigt.

Als Faser wurde die Alkali-resistente Glasfaser (AR-Glas) Cem-FIL® 61/2 der Firma Owens Corning eingesetzt. Die Alkali-resistente Glasfaser wurde durch das an der Dreistoffdüse angebrachte Schneidwerk auf die gewünschte Länge zurechtgeschnitten und direkt in der zurechtgeschnittenen Form in den Baustoffbeschichtungsmittelstrom der Komponenten A, B bzw. C und gegebenenfalls D eingebracht, bevor dieser auf einen Untergrund auftraf.

Applikation der Baustoffbeschichtungsmittel auf einen horizontal ausgerichteten Untergrund:
Das jeweilige Baustoffbeschichtungsmittel entsprechend der Angaben der Tabelle 1 wurde mit der Dreistoffdüse auf die oben beschriebene Weise auf eine ebene, horizontal ausgerichtete EPS-Platte (expandiertes Polystyrol) mit einer Grundfläche von 50 cm x 100 cm und einer Dicke von 5 cm aufgetragen. Es wurde in allen (Vergleichs)Beispielen ((V)Bsp.) dieselbe Fasermasse eingesetzt. Die Auftragsstärke der Baustoffbeschichtungsmittel betrug jeweils 4 bis 5 mm. Die so erhaltene Faser-verstärkte Baustoffbeschichtung wurde einmal mit einer Teflon-Rillenwalze glattgestrichen, um gegebenenfalls abstehende Fasern in die Faser-verstärkte Baustoffbeschichtung hineinzudrücken.

Der in Tabelle 1 aufgeführte Überstand der Fasern ergab sich aus der Differenz der Länge, um die die Fasern unmittelbar nach auftragen der jeweiligen Baustoffbeschichtungsmittel auf den Untergrund maximal aus der Faser-verstärkten Baustoffbeschichtung herausragten, und der Länge, um die die Fasern nach einmaligen Glattstreichen der vorgenannten Faser-verstärkten Baustoffbeschichtung maximal herausragten. Der Überstand ist also ein Maß für die Planarität der Oberfläche der Faser-verstärkten Beschichtungen. Faser-verstärkte Beschichtungen mit geringem Überstand sind erwünscht.

**Tabelle 1: Horizontale Applikation der Beschichtungsmittel:**

| | Faserlänge [mm] | Beschichtungsmittel | Überstand der Fasern [mm] |
|---|---|---|---|
| Bsp. 1 | 50 | A | 15 bis 20 |
| VBsp. 2 | 50 | B | 20 bis 25 |
| Bsp. 3 | 50 | A+D¹⁾ | 20 bis 25 |
| Bsp. 4 | 25 | A+D¹⁾ | 20 bis 25 |
| Bsp. 5 | 12 | A+D¹⁾ | 15 bis 20 |
| Bsp. 6 | 50; 25; 12,5 (im Mengenverhältnis 1 : 1 : 2) | A+D¹⁾ | 5 bis 10 |
| Bsp. 7 | 50 | C+D¹⁾ | 3 bis 5 |

| | | | |
|---|---|---|---|
| ¹⁾: Es wurden 1,5 Vol.-% Beschichtungsmittelkomponente D und 98,5 Vol.-% des Beschichtungsmittel A bzw. C eingesetzt, bezogen auf das wässrige Beschichtungsmittel. | | | |

Aus Beispiel 6 (Bsp. 6) der Tabelle 1 geht hervor, dass durch Einsatz eines Gemisches von Fasern unterschiedlicher Länge Faserüberstand verringert werden kann und somit eine gleichmäßigere Fläche erhalten werden kann.

Applikation der Baustoffbeschichtungsmittel auf einen vertikal ausgerichteten Untergrund:
Die Applikation der Beschichtungsmittel erfolgte analog zur horizontalen Applikation mit dem Unterschied, dass die Beschichtungsmittel nicht auf eine horizontal, sondern auf eine vertikal orientierte EPS-Platte (expandiertes Polystyrol) (Grundfläche: 100 cm x 100 cm; Dicke: 5 cm) appliziert wurden. Es wurde in allen (Vergleichs)Beispielen ((V)Bsp.) dieselbe Fasermasse eingesetzt.

Es wurde der Rückprall bestimmt. Der Rückprall ist der Anteil an Faser-modifiziertem Beschichtungsmittel, der bezogen auf die insgesamt eingesetzte Menge an Beschichtungsmittel und Fasern nach Durchführung des Verfahrens nicht auf dem Untergrund haftete, sondern abfiel.

Durch die erfindungsgemäße Vorgehensweise (Beispiele 8 und 12 bis 16) konnte der Rückprall gegenüber dem herkömmlichen Verfahren (Vergleichsbeispiel 9 bis 11) erheblich verringert werden. Dies trifft ganz besonders für die hochpolymerhaltigen Beschichtungsmittel C zu (Beispiel 16).

**Tabelle 2: Vertikale Applikation der Beschichtungsmittel:**

| | Faserlänge [mm] | Beschichtungsmittel | Rückprall [%] |
|---|---|---|---|
| Bsp. 8 | 50 | A | 21 |
| VBsp. 9 | 50 | B | 35 |
| VBsp. 10 | 50 | B+D¹⁾ | 39 |
| VBsp. 11 | 50; 25; 12,5 (im Mengenverhältnis 1 : 1 : 2) | B+D¹⁾ | 33 |
| Bsp. 12 | 50 | A+D¹⁾ | 20 |
| Bsp. 13 | 25 | A+D¹⁾ | 21 |
| Bsp. 14 | 12 | A+D¹⁾ | 22 |
| Bsp. 15 | 50; 25; 12,5 (im Mengenverhältnis 1 : 1 : 2) | A+D¹⁾ | 17 |
| Bsp. 16 | 50 | C+D¹⁾ | 5 |

| | | | |
|---|---|---|---|
| ¹⁾: Es wurden 1,5 Vol.-% Beschichtungsmittelkomponente D und 98,5 Vol.-% des Beschichtungsmittel A, B bzw. C eingesetzt, bezogen auf das wässrige Beschichtungsmittel. | | | |

### Austestung der mechanischen Eigenschaften:

Die Austestung erfolgte an Hand von Proben, die wie oben beschrieben durch Applikation der Baustoffbeschichtungsmittel auf einen vertikal ausgerichteten Untergrund erhalten wurden. Hierbei kamen Beschichtungsmittel, Fasern sowie Untergründe entsprechend der Angaben in den Tabellen 3 und 4 zum Einsatz.

Es wurden Haftzugfestigkeit und die Einbeulwerte gemäß der Richtline ETAG 004 (Guideline for European Technical Approvals) der Eota (European Organisation for Technical Approvals) bestimmt.

In der Richtlinie ETAG 004 werden für Beschichtungen auf Styropor Haftzugfestigkeiten von 0,08 N/mm² und Einbeulwerte von 3 oder 10 Joule gefordert; und für Beschichtungen auf Beton wird eine Haftzugfestigkeit von mindestens 0,25 N/mm² gefordert.

Diese Vorgaben werden mit den erfindungsgemäß hergestellten Baustoffbeschichtungen erfüllt und meist sogar übertroffen (Tabellen 3 und 4).

**Tabelle 3: Hochpolymerhaltige Faser-verstärkte Beschichtungen:**

| | Faserlänge [mm] | Beschichtungsmittel¹⁾ | Untergrund | Faseranteil [%]²⁾ | Haftzugfestigkeit [N/mm²] | Einbeulwert [J] |
|---|---|---|---|---|---|---|
| VBsp.17 | - | C+D | EPS | 0 | 0,11 | 0 |
| Bsp.18 | 12,5 | C+D | EPS | 61 | 0,10 | 14 |
| Bsp.19 | 25,0 | C+D | EPS | 49,3 | 0,09 | 14 |
| Bsp.20 | 50,0 | C+D | EPS | 50,7 | 0,10 | 12 |
| Bsp.21 | 50; 25; 12,5 (im Mengenverhältnis 1:1:2) | C+D | EPS | 51,3 | 0,11 | 14 |
| VBsp.22 | - | C+D | Beton | 0 | 0,56 | n.b.³⁾ |
| Bsp.23 | 12,5 | C+D | Beton | 71,3 | 0,63 | n.b.³⁾ |
| Bsp.24 | 25,0 | C+D | Beton | 58,3 | 0,59 | n.b.³⁾ |
| Bsp.25 | 50,0 | C+D | Beton | 61,7 | 0,64 | n.b.³⁾ |
| Bsp.26 | 50; 25; 12, 5 (im Mengenverhältnis 1:1:2) | C+D | Beton | 65,7 | 0,71 | n.b.³⁾ |

| | | | | | | |
|---|---|---|---|---|---|---|
| ¹⁾: Es wurden 1,5 Vol.-% Beschichtungsmittelkomponente D und 98,5 Vol.-% des Beschichtungsmittel C eingesetzt, bezogen auf das wässrige Beschichtungsmittel. ²⁾: Die Angaben der eingesetzten Menge an Fasern beziehen sich auf auf die Trockenmasse der Beschichtungsmittel C und D. ³⁾ n.b. = nicht bestimmbar, keine Messung auf der Betonplatte möglich. | | | | | | |

Auch die erfindungsgemäß hergestellten Faser-verstärkten Mörtelbeschichtungen erfüllen die von der ETAG 004 Richtlinie geforderten Werte (Tabelle 4) und übertreffen sogar herkömmliche, Fasergewebe enthaltende Beschichtungen (VBsp. 32 und 33).

Die Baustoffbeschichtungsmittel ließen sich nach dem erfindungsgmäßen Verfahren problemlos verarbeiten.

**Tabelle 4: Faser-verstärkte Mörtelbeschichtungen:**

| | Faserlänge [mm] | Beschich tungsmittel¹⁾ | Untergrund | Faseranteil [%]²⁾ | Haftzugfestigkeit [N/mm²] | Einbeulwert [J] |
|---|---|---|---|---|---|---|
| VBsp.27 | - | A+D | EPS | 0,0 | 0,10 | 1 |
| VBsp.28 | 12,5 | A+D | EPS | 13,9 | 0,11 | 6 |
| Bsp.29 | 25,0 | A+D | EPS | 21,8 | 0,10 | 10 |
| Bsp.30 | 50,0 | A+D | EPS | 16,4 | 0,10 | 14 |
| Bsp.31 | 50; 25; 12,5 (im Mengenverhältnis 1:1:2) | A+D | EPS | 17,7 | 0,12 | 14 |
| VBsp.32 | Fasergewebe | A+D | EPS | 4,1% | 0,09 | 6 |
| VBsp.33 | Fasergewebe | B+D | EPS | 4,0% | 0,00 | 0 |
| VBsp.34 | - | A+D | Beton | 0,0 | 0,71 | n.b.³⁾ |
| Bsp.35 | 12,5 | A+D | Beton | 19,2 | 0,69 | n.b.³⁾ |
| Bsp.36 | 25,0 | A+D | Beton | 24,1 | 0,73 | n.b.³⁾ |
| Bsp.37 | 50,0 | A+D | Beton | 21,1 | 0,72 | n.b.³⁾ |
| Bsp.38 | 50; 25; 12,5 (im Mengenverhältnis 1:1:2) | C+D | Beton | 22,3 | 0,81 | n.b.³⁾ |
| VBsp.39 | - | B+D | EPS | 0,0 | 0,00 | 0 |
| VBsp.40 | 12,5 | B+D | EPS | 13,1 | 0,00 | 0,5 |
| VBsp.41 | 25,0 | B+D | EPS | 14,5 | 0,00 | 1 |
| VBsp.42 | 50,0 | B+D | EPS | 12,9 | 0,00 | 2 |
| VBsp.43 | 50:25:12,5 (im Mengenverhältnis 1:1:2) | B+D | EPS | 18,3 | 0,00 | 2,5 |

| | | | | | | |
|---|---|---|---|---|---|---|
| ¹⁾: Es wurden 1,5 Vol.-% Beschichtungsmittelkomponente D und 98,5 Vol.-% des Beschichtungsmittel A, B bzw. C eingesetzt, bezogen auf das wässrige Beschichtungsmittel. ²⁾: Die Angaben der eingesetzten Menge an Fasern beziehen sich auf auf die Trockenmasse der Beschichtungsmittel D und A bzw. B bzw. C. ³⁾ n.b. = nicht bestimmbar, keine Messung auf der Betonplatte möglich. | | | | | | |

Aus den Tabellen 3 und 4 geht hervor, dass die erfindungsgemäß hergestellten Baustoffbeschichtungen (Bsp.) hinsichtlich ihrer mechanischen Eigenschaften gegenüber herkömmlichen Baustoffbeschichtungen (VBsp.) überlegen sind. Diese vorteilhaften mechanischen Eigenschaften werden auch durch die gleichmäßige Verteilung der Fasern in den Baustoffbeschichtungen bewirkt. Das bei herkömmlichen Baustoffbeschichtungen übliche Auftreten der "Nesterbildung" von Fasern führt dagegen zu einer Verschlechterung der mechanischen Eigenschaften. Diese Aussagen gelten insbesondere für die Fälle, in denen große Mengen an Fasern in die Baustoffbeschichtungen eingebracht wurden.

## Patentansprüche

1. Verfahren zur Herstellung von Faser-verstärkten Baustoffbeschichtungen,
indem Baustoffbeschichtungsmittel enthaltend 0,1 bis 70 Gew.-% mineralische Bindemittel, 1 bis 75 Gew.-% Füllstoffe und 0 bis 20 Gew.-% Zusatzstoffe,
mittels einer Spritzdüse zu einem Baustoffbeschichtungsmittelstrom versprüht werden und
ein oder mehrere Fasern in den Baustoffbeschichtungsmittelstrom eingebracht werden,
und der so erhaltene Faser-modifizierte Baustoffbeschichtungsmittelstrom anschließend auf einen Untergrund auftrifft, **dadurch gekennzeichnet, dass**
die Fasern in einer Menge von 15 bis 75 Gew.-% eingesetzt werden und
die Baustoffbeschichtungsmittel 7 bis 90 Gew.-% an einem oder mehreren Polymerisaten auf Basis ethylenisch ungesättigter Monomere enthalten,
wobei sich die Angaben in Gew.-% jeweils auf das Trockengewicht der Baustoffbeschichtungsmittel beziehen.

2. Verfahren nach Anspruch 1, **dadurch gekennzeichnet, dass** als Fasern ein oder mehrere Fasern aus der Gruppe der organischen oder anorganischen Fasern eingesetzt werden.

3. Verfahren nach Anspruch 1 oder 2, **dadurch gekennzeichnet, dass** die Fasern Längen von 0,1 µm bis unendlicher Länge aufweisen.

4. Verfahren nach Anspruch 1 bis 3, **dadurch gekennzeichnet, dass** Fasern mit unterschiedlichen Längen eingesetzt werden, wobei sich die Längen der Fasern wie 1 zu 100 bis 1 zu 1,1 verhalten.

5. Verfahren nach Anspruch 1 bis 4, **dadurch gekennzeichnet, dass** die mineralischen Bindemittel ausgewählt werden aus der Gruppe umfassend Zemente, Flugasche, Microsilica, Kalkhydrat, Weißkalkhydrat und Gips.

6. Verfahren nach Anspruch 1 bis 5, **dadurch gekennzeichnet, dass** Polymerisate auf Basis von einem oder mehreren ethylenisch ungesättigten Monomeren ausgewählt aus der Gruppe umfassend Vinylester, (Meth)acrylsäureester, Vinylaromaten, Olefine, 1,3-Diene und Vinylhalogenide eingesetzt werden.

7. Verfahren nach Anspruch 1 bis 6 zur Herstellung von hochpolymerhaltigen, Faser-verstärkten Baustoffbeschichtungen, **dadurch gekennzeichnet, dass** 20 bis 90 Gew.-% Polymerisate eingesetzt werden, bezogen auf das Trockengewicht des Baustoffbeschichtungsmittels.

8. Verfahren nach Anspruch 7 zur Herstellung von hochpolymerhaltigen, Faser-verstärkten Baustoffbeschichtungen, **dadurch gekennzeichnet, dass** 0,1 bis 20 Gew.-% mineralische Bindemittel eingesetzt werden, bezogen auf das Trockengewicht der hochpolymerhaltigen Baustoffbeschichtungsmittel.

9. Verfahren nach Anspruch 1 bis 6 zur Herstellung von Faser-verstärkten Mörtelbeschichtungen, **dadurch gekennzeichnet, dass** 7 bis 20 Gew.-% Polymerisate eingesetzt werden, bezogen auf das Trockengewicht des Baustoffbeschichtungsmittels.

10. Verfahren nach Anspruch 9 zur Herstellung von Faser-verstärkten Mörtelbeschichtungen, **dadurch gekennzeichnet, dass** 5 bis 40 Gew.-% mineralische Bindemittel eingesetzt werden, bezogen auf das Trockengewicht der Mörtelbeschichtungsmittel.

11. Verfahren nach Anspruch 1 bis 10, **dadurch gekennzeichnet, dass** es für den Bau von Böschungen, Tunnel, Minen, Kanälen, Wärmedämmverbundsystemen oder die Beschichtung von Böden, wänden, Dächern, Metallträgern, Rohren oder für die Betonsanierung oder für die Bauwerksverstärkung eingesetzt wird.

12. Baustoffbeschichtungen erhältlich nach den Verfahren gemäß Anspruch 1 bis 10.

## Claims

1. Method for producing fiber-reinforced building-material coatings,
in which building-material coating agents containing 0.1 to 70% by weight mineral binders, 1 to 75% by weight fillers, and 0 to 20% by weight additives,
are sprayed by means of a spray nozzle to give a building-material coating agent stream and
one or more fibers are introduced into the building-material coating agent stream,
and the resultant fiber-modified building-material coating agent stream then strikes a substrate, **characterized in that**
the fibers are used in an amount of 15 to 75% by weight and
the building-material coating agents contain 7 to 90% by weight of one or more polymers based on ethylenically unsaturated monomers,
wherein the figures in % by weight in each case relate to the dry weight of the building-material coating agents.

2. Method according to Claim 1, **characterized in that** one or more fibers from the group of organic or inorganic fibers are used as fibers.

3. Method according to Claim 1 or 2, **characterized in that** the fibers have lengths from 0.1 µm to an infinite length.

4. Method according to Claims 1 to 3, **characterized in that** fibers having differing lengths are used, wherein the ratio of the lengths of the fibers is from 1 to 100 to 1 to 1.1.

5. Method according to Claims 1 to 4, **characterized in that** the mineral binders are selected from the group comprising cement, fly ash, microsilica, hydrated lime, white hydrated lime and gypsum.

6. Method according to Claims 1 to 5, **characterized in that** polymers based on one or more ethylenically unsaturated monomers selected from the group comprising vinyl esters, (meth)acrylic acid esters, vinylaromatics, olefins, 1,3-dienes and vinyl halides are used.

7. Method according to Claims 1 to 6 for producing high-polymer-containing fiber-reinforced building-material coatings, **characterized in that** 20 to 90% by weight of polymers are used, based on the dry weight of the building-material coating agent.

8. Method according to Claim 7 for producing high-polymer-containing fiber-reinforced building-material coatings, **characterized in that** 0.1 to 20% by weight mineral binders are used, based on the dry weight of the high-polymer-containing building-material coating agents.

9. Method according to Claims 1 to 6 for producing fiber-reinforced mortar coatings, **characterized in that** 7 to 20% by weight of polymers are used, based on the dry weight of the building-material coating agent.

10. Method according to Claim 9 for producing fiber-reinforced mortar coatings, **characterized in that** 5 to 40% by weight of mineral binders are used, based on the dry weight of the mortar-coating agents.

11. Method according to Claims 1 to 10, **characterized in that** it is used for building embankments, tunnels, mines, channels, exterior insulation and finish systems or coating soils, walls, roofs, metal supports, tubes, or for refurbishing concrete or for reinforcing structures.

12. Building-material coatings obtainable by the method according to Claims 1 to 10.

## Revendications

1. Procédé de fabrication de revêtements de matériaux de construction renforcés par des fibres,
selon lequel des agents de revêtement de matériaux de construction contenant 0,1 à 70 % en poids de liants minéraux, 1 à 75 % en poids de charges et 0 à 20 % en poids d'additifs
sont pulvérisés par une buse de pulvérisation en un courant d'agents de revêtement de matériaux de construction, et
une ou plusieurs fibres sont introduites dans le courant d'agents de revêtement de matériaux de construction,
et le courant d'agents de revêtement de matériaux de construction modifié par des fibres ainsi obtenu percute ensuite un substrat,
**caractérisé en ce que**
les fibres sont utilisées en une quantité de 15 à 75 % en poids, et
les agents de revêtement de matériaux de construction contiennent 7 à 90 % en poids d'un ou de plusieurs polymères à base de monomères éthyléniquement insaturés,
les données en % en poids se rapportant à chaque fois au poids sec des agents de revêtement de matériaux de construction.

2. Procédé selon la revendication 1, **caractérisé en ce qu'**une ou plusieurs fibres du groupe des fibres organiques ou inorganiques sont utilisées en tant que fibres.

3. Procédé selon la revendication 1 ou 2, **caractérisé en ce que** les fibres présentent des longueurs allant de 0,1 µm jusqu'à des longueurs sans fin.

4. Procédé selon les revendications 1 à 3, **caractérisé en ce que** des fibres de différentes longueurs sont utilisées, les longueurs des fibres présentant des rapports tels que de 1 sur 100 à 1 sur 1,1.

5. Procédé selon les revendications 1 à 4, **caractérisé en ce que** les liants minéraux sont choisis dans le groupe comprenant les ciments, les cendres volantes, la microsilice, la chaux hydratée, la chaux hydratée blanche et le gypse.

6. Procédé selon les revendications 1 à 5, **caractérisé en ce que** des polymères à base d'un ou de plusieurs monomères éthyléniquement insaturés choisis dans le groupe comprenant les esters de vinyle, les esters de l'acide (méth)acrylique, les composés aromatiques de vinyle, les oléfines, les 1,3-diènes et les halogénures de vinyle sont utilisés.

7. Procédé selon les revendications 1 à 6 pour la fabrication de revêtements de matériaux de construction renforcés par des fibres à teneur élevée en polymères, **caractérisé en ce que** 20 à 90 % en poids de polymères sont utilisés, par rapport au poids sec de l'agent de revêtement de matériaux de construction.

8. Procédé selon la revendication 7 pour la fabrication de revêtements de matériaux de construction renforcés par des fibres à teneur élevée en polymères, **caractérisé en ce que** 0,1 à 20 % en poids de liants minéraux sont utilisés, par rapport au poids sec des agents de revêtement de matériaux de construction à teneur élevée en polymères.

9. Procédé selon les revendications 1 à 6 pour la fabrication de revêtements de mortier renforcés par des fibres, **caractérisé en ce que** 7 à 20 % en poids de polymères sont utilisés, par rapport au poids sec de l'agent de revêtement de matériaux de construction.

10. Procédé selon la revendication 9 pour la fabrication de revêtements de mortier renforcés par des fibres, **caractérisé en ce que** 5 à 40 % en poids de liants minéraux sont utilisés, par rapport au poids sec des agents de revêtement de mortier.

11. Procédé selon les revendications 1 à 10, **caractérisé en ce qu'**il est utilisé pour la construction de talus, de tunnels, de mines, de canaux, de systèmes composites d'isolation thermique ou le revêtement de sols, de murs, de toits, de supports métalliques, de tubes ou pour l'assainissement de béton ou pour le renforcement d'édifices.

12. Revêtements de matériaux de construction pouvant être obtenus par les procédés selon les revendications 1 à 10.
